# EUROPEAN PATENT APPLICATION

(11) **EP 2 366 562 A1**
(43) Date of publication of application: **21.09.2011**
(21) Application number: 11155354.1
(22) Date of filing: 22.02.2011
(51) Int. Cl.: B60C 23/02, B60G 11/27, B60G 17/015, B60G 17/052, B62D 61/12

(54) **Method and system for improving the drivability of a motor vehicle**

(30) Priority: 01.03.2010 SE 1050186
(71) Applicant: Scania CV AB, 151 87 Södertälje (SE)
(72) Inventor: Aslan, Daniel, 145 69, Norsborg (SE)

(57) **Abstract**

The invention relates to a method for improving the drivability of a motor vehicle, comprising the steps of: continuously detecting the air pressure in the vehicle's tyres; comparing said air pressure with a predetermined pressure value for the respective tyres; delivering a warning when said tyre pressure is below said predetermined pressure value in any of the tyres, comprising the step of using an existing bellows configuration of an air suspension system of the vehicle to reduce the load upon at least the tyre in which the air pressure is below said predetermined pressure value. The invention relates also to a system for improving the drivability of a motor vehicle, and to a motor vehicle comprising such a system.

## Description

### TECHNICAL FIELD

The invention relates to a method for improving the drivability of a motor vehicle according to the preamble of claim 1. The invention relates also to a system for improving the drivability of a motor vehicle according to the preamble of claim 9. The invention relates also to a motor vehicle.

### BACKGROUND

Reduced pressure in tyres of a motor vehicle makes the vehicle more difficult to handle, with consequent impairment of safety, particularly when a tyre bursts. Vehicles such as trucks are currently often equipped with systems which monitor the pressure in the vehicle's tyres, known as TPM (tyre pressure monitoring) systems. In such a system, a sensor is associated with each tyre of the vehicle, and the sensors are arranged to communicate with an electronic control unit. The electronic control unit is then connected to an interface such that, when there is reduced pressure in any tyre, e.g. due to puncture, the electronic control unit is adapted to warning the driver via the interface that the pressure in the tyre is dropping. According to a variant, the driver receives different warnings depending on how quickly the pressure in the tyre is dropping, whereupon he/she is expected to apply appropriate measures.

A problem with such a solution is that it merely draws the driver's attention to the problem, but effects no improvements with regard to drivability and gives no instructions about measures to be applied. Should the driver decide to drive on, there is risk of the tyre becoming so warm that it may burst, substantially increasing the risk of skidding and hence jeopardising traffic safety.

In the state of the art there are TPM systems connected in such a way that when the pressure in a tyre is reduced, e.g. by puncture, an air hose is connected to pump air for continuous replenishment. A disadvantage of such a system is that it involves some kind of rotating hose connection, which leads to leakage. Such a system also increases fuel consumption in making it necessary for the compressor to run continuously because of leakage at the connection.

### OBJECTS OF THE INVENTION

An object of the present invention is to propose a method for improving the drivability of a motor vehicle when reduced tyre pressure occurs, which method enhances safety, is cost-effective and does not affect fuel consumption.

A further object of the present invention is to propose a system for improving the drivability of a motor vehicle when reduced tyre pressure occurs, which system enhances safety, is cost-effective and does not affect fuel consumption.

### SUMMARY OF THE INVENTION

These and other objects indicated by the description set out below are achieved by a method, a system and a motor vehicle of the kind indicated in the introduction which further present the features indicated in the characterising parts of the attached independent claims 1, 9 and 17. Preferred embodiments of the method and the system are defined in the attached dependent claims 2-8 and 10-16.

According to the invention, the objects are achieved with a method for improving the drivability of a motor vehicle, comprising the steps of: continuously detecting the air pressure in the vehicle's tyres; comparing said air pressure with a predetermined pressure value for the respective tyres; delivering a warning when said tyre pressure is below said predetermined pressure value in any of the tyres, comprising the step of using an existing bellows configuration of an air suspension system of the vehicle to reduce the load upon at least the tyre in which the air pressure is below said predetermined pressure value. This improves drivability when there is reduced air pressure in any of the vehicle's tyres, thereby enhancing traffic safety when for example a puncture occurs. This makes it possible, when there is reduced air pressure in any of the vehicle's tyres, for its driver to drive longer and further, enhancing the probability of the vehicle being able to reach a nearby location at which to deal with the puncture.

According to an embodiment of the method, the step of reducing the load upon a tyre involves reducing the air pressure of a bellows unit of the bellows configuration which is associated with the tyre in which the air pressure is below said predetermined pressure value, so that the vehicle's chassis is lowered relative to the axle which is associated with said tyre.

According to an embodiment of the method, in cases where the vehicle comprises a powered axle provided with powered wheels, the step of reducing the load upon a tyre involves load transfer to tyres of powered wheels on the opposite side of the vehicle. This is a variant for achieving said load reduction which can be implemented irrespective of which tyre of the vehicle's wheels has a reduced air pressure.

According to an embodiment of the method, in cases where the vehicle comprises a tag axle provided with supporting wheels, the step of reducing the load upon a tyre involves raising said tag axle. Raising the tag axle in response to reduced air pressure in any of the tyres of the supporting wheels makes it possible for the vehicle to run very safely, since the supporting wheels will not touch the ground and will therefore not affect driving.

According to an embodiment of the method, the step of raising said tag axle involves increasing the air pressure in a bellows unit of the bellows configuration which is associated with the tag axle, so that the bellows unit raises the tag axle relative to the vehicle's chassis.

According to an embodiment of the method, the step of reducing the load upon a tyre involves load transfer between the tag axle and the powered axle. This load transfer makes it possible to adjust the load reduction according to the amount of air pressure reduction. Such load reduction may be applied when there is reduced air pressure in any of the tyres of the powered wheels or the supporting wheels.

According to an embodiment of the method, in cases where the vehicle comprises a front axle provided with front wheels, the step of load reduction upon a tyre involves load transfer to tyres of front wheels on the opposite side of the vehicle. This makes improved drivability possible when there is reduced air pressure in any of the tyres of the front wheels.

According to an embodiment of the method, in cases where the vehicle comprises a further front axle, the step of load reduction upon a tyre involves load transfer between said front axles. This makes effective load reduction possible and hence improved drivability when there is reduced air pressure in any of the tyres of the front wheels.

According to the invention, the objects are also achieved with a system for improving the drivability of a motor vehicle, comprising an air suspension system incorporating a bellows configuration, devices for detecting the air pressure in the vehicle's tyres, means for comparing said air pressure with a predetermined pressure value for the respective tyres, and devices for delivering a warning when said tyre pressure is below said predetermined pressure value in any of the tyres, comprising devices for using said bellows configuration to reduce the load upon at least the tyre in which the air pressure is below said predetermined pressure value. This improves drivability when there is reduced air pressure in any of the vehicle's tyres, thereby enhancing traffic safety when for example a puncture occurs. This makes it possible, when there is reduced air pressure in any of the vehicle's tyres, for the driver to drive longer and further, enhancing the probability of the vehicle being able to reach a nearby location at which to deal with the puncture. Such load reduction is achievable cost-effectively on vehicles equipped with air suspension systems incorporating bellows configurations with bellows units and tyre air pressure monitoring systems with pressure sensors by combining them.

According to an embodiment of the system, when the pressure in any tyre is below said predetermined pressure value, the air pressure of a bellows unit of the bellows configuration which is associated with said tyre is arranged to be reduced so that the vehicle's chassis is lowered relative to the axle associated with said tyre, so that the load upon the tyre is reduced.

According to an embodiment of the system, in cases where the vehicle comprises a powered axle provided with powered wheels, said bellows configuration is adapted to effecting load transfer to tyres of powered wheels on the opposite side of the vehicle. This is a variant for achieving said load reduction which can be implemented irrespective of which tyre of the vehicle's wheels has a reduced air pressure.

According to an embodiment of the system, in cases where the vehicle comprises a tag axle provided with supporting wheels, said bellows configuration is adapted to raising said tag axle. The fact that the system is adapted to raising the tag axle in response to reduced air pressure in any of the tyres of the supporting wheels makes it possible for the vehicle to run very safely, since the supporting wheels will not touch the ground and will therefore not affect driving.

According to an embodiment of the system, when the air pressure in any of the tyres of the supporting wheels is below said predetermined pressure value, the air pressure of a bellows unit of the bellows configuration which is associated with the tag axle is arranged to be increased so that said tag axle is raised relative to the vehicle's chassis.

According to an embodiment of the system, said bellows configuration is adapted to effecting load transfer between the tag axle and the powered axle. This load transfer makes it possible to adjust the load reduction according to the amount of air pressure reduction. Such load reduction may be applied when there is reduced air pressure in any of the tyres of the powered wheels or supporting wheels.

According to an embodiment of the system, in cases where the vehicle comprises a front axle provided with front wheels, said bellows configuration is adapted to effecting load transfer to tyres of front wheels on the opposite side of the vehicle. This makes improved drivability possible when there is reduced air pressure in any of the tyres of the front wheels.

According to an embodiment of the system, in cases where the vehicle comprises a further front axle, said bellows configuration is adapted to effecting load transfer between said front axles. This makes effective load reduction possible and hence improved drivability when there is reduced air pressure in any of the tyres of the front wheels.

### DESCRIPTION OF THE DRAWINGS

The present invention will be better understood by reading the detailed description set out below in conjunction with the attached drawings, in which the same reference notations pertain to similar items throughout the various views, and in which:
Fig. 1 illustrates schematically a motor vehicle according to an embodiment of the invention;
Fig. 2 depicts schematically a system according to an embodiment of the present invention, situated in a motor vehicle;
Fig. 3 is a schematic block diagram for control of a system according to the present invention;
Fig. 4 is a schematic block diagram for control of a system in Fig. 5 according to an embodiment of the present invention; and
Fig. 5 is a schematic block diagram of a method according to an embodiment of the present invention.

### DESCRIPTION OF EMBODIMENTS

The term "link" refers herein to a communication link which may be a physical connection such as an opto-electronic communication line, or a non-physical connection such as a wireless connection, e.g. a radio link or microwave link.

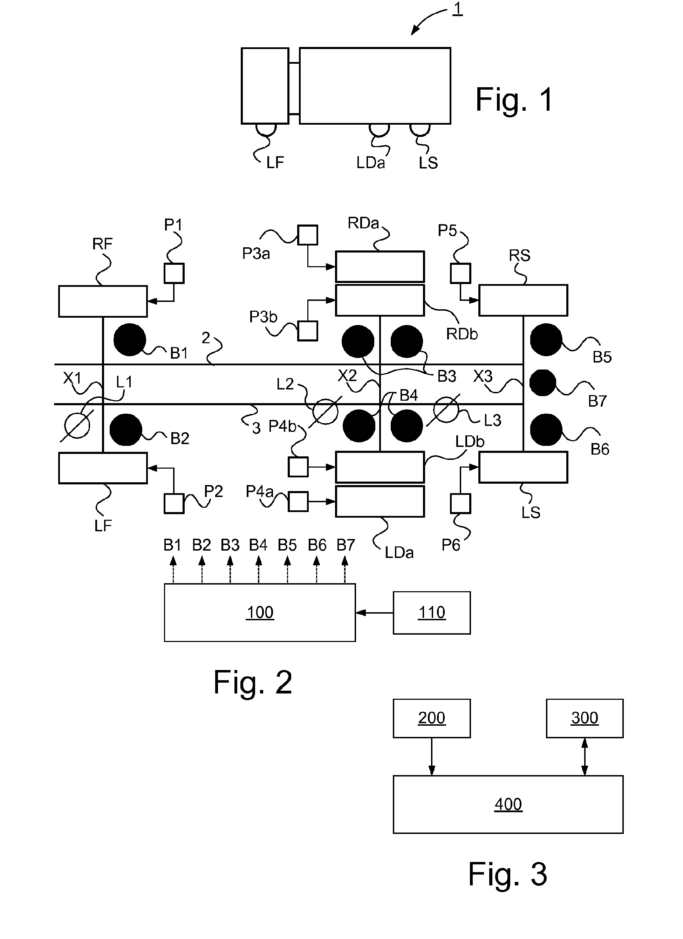

Fig. 1 depicts a side view of a vehicle 1. The exemplified vehicle 1 is a heavy vehicle in the form of a truck. The vehicle may alternatively be a bus or a passenger car. According to a variant, the vehicle takes the form of a heavy vehicle such as a truck with a forward axle, a rear powered axle and a rear tag axle, depicted with a right front wheel RF for the forward axle, a right powered wheel RD for the powered axle and a right supporting wheel RS for the tag axle.

Fig. 2 depicts schematically a system for improving the drivability of a motor vehicle according to an embodiment of the present invention, situated in a motor vehicle.

The vehicle comprises a frame 2, 3 and a forward axle X1 with mutually opposite front wheels RF, LF provided with tyres, a rear powered axle X2 with mutually opposite powered wheels RD, LD provided with tyres, and a rear tag axle X3 with mutually opposite supporting wheels RS, LS provided with tyres. Said tyres of the wheels RF, LF, RD, LD, RS, LS are intended to be pressurised with air at a predetermined air pressure, i.e. the respective tyres are intended to be pressurised to an air pressure which has a predetermined pressure value.

The vehicle further comprises an air suspension system comprising a bellows configuration. The bellows configuration comprises a first bellows unit B1 situated on the right side and associated with the forward axle X1, and a second bellows unit B2 situated on the left side and associated with the forward axle X1. The first and second bellows units B1, B2 each incorporate a single bellows.

The bellows configuration further comprises a third bellows unit B3 situated on the right side and associated with the rear powered axle X2, and a fourth bellows unit B4 situated on the left side and associated with the rear powered axle X2. The third and fourth bellows units B3, B4 each incorporate a pair of bellows provided with air connection with one another.

The bellows configuration further comprises a fifth bellows unit B5 situated on the right side and associated with the rear tag axle X3, and a sixth bellows unit B6 situated on the left side and associated with the rear tag axle X3. The fifth and sixth bellows units B5, B6 each incorporate a single bellows.

The respective bellows units B1-B6 are disposed between the vehicle frame 2, 3 and the respective axles, making it possible for the vehicle to be raised and lowered by regulation of air in bellows units. Load transfer between the powered axle X2 and the tag axle X3 is also possible by regulation of air in bellows units.

The bellows configuration further comprises a seventh bellows unit B7 associated with the rear tag axle X3. The seventh bellows unit B7 takes the form of a single bellows. According to an embodiment of the invention, the seventh bellows unit is adapted to raising and lowering the tag axle X3 by regulation of air in the seventh bellows unit B7.

The air suspension system further comprises an air valve configuration 100 according to an embodiment of the present invention. The air valve configuration 100 is connected to the bellows configuration B1, B2, B3, B4, B5, B6, B7 and is adapted to regulating the air pressure in the respective bellows units B1, B2, B3, B4, B5, B6, B7 of the bellows configuration.

The vehicle further comprises an air pressure source configuration 110 to supply air to the air valve configuration 100.

The air valve configuration 100 comprises according to an embodiment undepicted air valve units incorporating valve means with an air intake connected to a compressed air source, with a venting outlet and with a delivery outlet, and valve means each adapted to regulating the air pressure in the respective bellows unit.

Each of the respective bellows units B1, B2, B3, B4, B5, B6, B7 of the bellows configuration comprises a pressure sensor adapted to detecting the air pressure in the bellows unit.

The system comprises a tyre air pressure monitoring system for detecting the air pressure in the vehicle's tyres. Said tyre air pressure monitoring system comprises a first pressure sensor P1 adapted to detecting the air pressure in the tyre of the right front wheel RF, a second pressure sensor P2 adapted to detecting the air pressure in the tyre of the left front wheel LF, an outer right powered wheel pressure sensor P3a adapted to detecting the air pressure in the tyre of the outer right powered wheel RDa, an inner right powered wheel pressure sensor P3b adapted to detecting the air pressure in the tyre of the inner right powered wheel RDb, an outer left powered wheel pressure sensor P4a adapted to detecting the air pressure in the tyre of the outer left powered wheel LDa, an inner left powered wheel pressure sensor P4b adapted to detecting the air pressure in the tyre of the inner left powered wheel LDb, a fifth pressure sensor P5 adapted to detecting the air pressure in the tyre of the right supporting wheel RS, and a sixth pressure sensor P6 adapted to detecting the air pressure in the tyre of the left supporting wheel LS.

The air suspension system further comprises a first level sensor L1 associated with the second bellows unit B2 to determine the level of the vehicle frame 2, 3 relative to a reference associated with said bellows unit B2.

The air suspension system further comprises a second level sensor L2 and a third level sensor L3 situated adjacent to the powered axle X2 and associated with the fourth bellows unit B4 to determine the level of the vehicle frame 2, 3 relative to a reference associated with said fourth bellows unit B4, e.g. the powered axle X2.

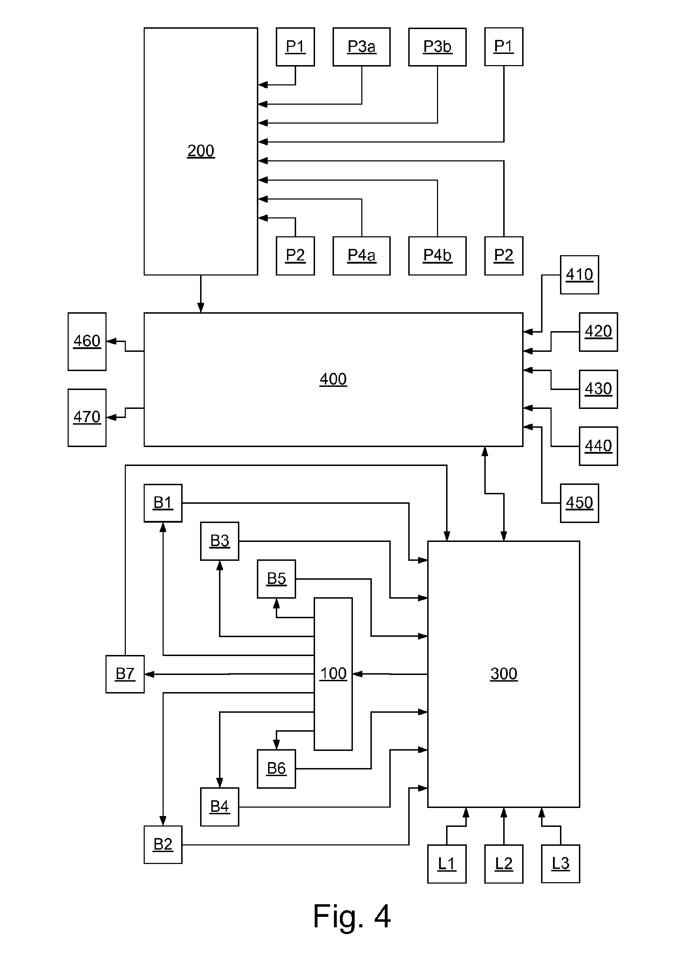

The tyre air pressure monitoring system comprises a first control unit 200 which is depicted in Figs. 3 and 4 for monitoring the air pressure in the vehicle's tyres and adapted to comparing the air pressure in the vehicle's tyres detected by said pressure sensors P1, P2; P3a, P3b, P4a, P4b, P5, P6 with a predetermined pressure value for the respective tyres.

The air suspension system comprises a second control unit 300 depicted in Figs. 3 and 4 for control of said bellows configuration, which second control unit 300 is connected to the first control unit 200 and to the bellows configuration and is adapted to responding when a tyre is below said predetermined pressure value by reducing, via the air valve configuration, the load upon the tyre in which the air pressure is below said predetermined pressure value.

The system further comprises according to an embodiment a central control unit 400 depicted in Figs. 3 and 4 to which said control units are connected. Fig. 3 is a schematic block diagram for control of the system according to the present invention, in which the first control unit 200 and the second control unit 300 are connected to the central control unit 400.

The first control unit 200 is signal-connected to the central control unit 400 via a link. The second control unit 300 is signal-connected to the central control unit 400 via a link.

The central control unit 400 is adapted to receiving from the first control unit 200 a signal representing tyre air pressure data. The central control unit 400 is adapted to comparing the pressure value of the air pressure of the vehicle's tyres with a predetermined pressure value for the respective tyres. If the pressure value of a tyre of the vehicle is below said predetermined pressure value, e.g. due to puncture of a tyre, the central control unit 400 is adapted to sending to the second control unit 300 a signal representing information data concerning the difference between said predetermined pressure value and the pressure value of the tyre which is below the predetermined pressure value. The second control unit 300 is adapted to sending a signal via the air valve configuration 100 which is adapted to controlling the bellows configuration so that the load is reduced upon at least the tyre in which the air pressure is below said predetermined pressure value.

Should the tyre in which the air pressure is lower than the predetermined pressure value be the tyre of any of the powered wheels RDa, RDb, LDa, LDb, according to an embodiment the bellows unit of the third bellows unit B3 or the fourth bellows unit B4 of said bellows configuration is adapted to using inter alia said pressure difference as a basis for effecting load transfer to tyres of the powered wheels on the opposite side of the vehicle in order to reduce the load upon the tyre with reduced air pressure by reducing the pressure in the bellows unit B3 or B4 associated with the wheel which has a punctured tyre, thereby effecting load transfer.

Should the tyre in which the air pressure is lower than the predetermined pressure value be the tyre of one of the supporting wheels RS, LS, according to an embodiment the seventh bellows unit B7 is adapted to using inter alia said pressure difference as a basis for raising said tag axle X3 by air supply from the valve configuration 100.

Should the tyre in which the air pressure is lower than the predetermined pressure value be the tyre of any of the powered wheels RDa, RDb, LDa, LDb, according to an embodiment the bellows unit of the third bellows unit B3 or the fourth bellows unit B4 of said bellows configuration is adapted to using inter alia said pressure difference as a basis for load transfer from the powered axle X2 to the tag axle X3 in order to reduce the load upon the tyre with reduced air pressure.

Should the tyre in which the air pressure is lower than the predetermined pressure value be the tyre of one of the front wheels RF, LF, according to an embodiment the first bellows unit B1 or the second bellows unit B2 of said bellows configuration is adapted to using inter alia said pressure difference as a basis for load transfer to tyres on the front wheels on the opposite side of the vehicle in order to reduce the load upon the tyre with reduced air pressure, i.e. to reducing the pressure in the bellows unit on the side where the air pressure in the tyre is lower, i.e. where the tyre is leaking, and to maintaining or increasing the pressure of the bellows unit on the other side.

Consequently, information about air pressures of tyres of the vehicle's wheels is used by the air suspension system to reduce, by means of bellows units of the bellows configuration, the load/pressure on any tyre in which the air pressure is reduced.

Fig. 4 is a schematic block diagram for control of the system according to an embodiment of the present invention.

The first control unit 200 is signal-connected to the first pressure sensor P1 via a link. The first control unit 200 is adapted to receiving from the first pressure sensor P1 via the link a signal representing air pressure data of the tyre of the right front wheel RF.

The first control unit 200 is signal-connected to the second pressure sensor P2 via a link. The first control unit 200 is adapted to receiving from the second pressure sensor P2 via the link a signal representing air pressure data of the tyre of the right front wheel LF.

The first control unit 200 is signal-connected to the outer right powered wheel pressure sensor P3a via a link. The first control unit 200 is adapted to receiving from the outer right powered wheel pressure sensor P3a via the link a signal representing air pressure data of the tyre of the outer right powered wheel RDa.

The first control unit 200 is signal-connected to the inner right powered wheel pressure sensor P3b via a link. The first control unit 200 is adapted to receiving from the inner right powered wheel pressure sensor P3b via the link a signal representing air pressure data of the tyre of the inner right powered wheel RDb.

The first control unit 200 is signal-connected to the outer left powered wheel pressure sensor P4a via a link. The first control unit 200 is adapted to receiving from the outer left powered wheel pressure sensor P4a via the link a signal representing air pressure data of the tyre of the outer left powered wheel LDa.

The first control unit 200 is signal-connected to the inner left powered wheel pressure sensor P4b via a link. The first control unit 200 is adapted to receiving from the inner left powered wheel pressure sensor P4b via the link a signal representing air pressure data of the tyre of the inner left powered wheel LDb.

The first control unit 200 is signal-connected to the fifth pressure sensor P5 via a link. The first control unit 200 is adapted to receiving from the fifth pressure sensor P5 via the link a signal representing air pressure data of the tyre of the right supporting wheel RS.

The first control unit 200 is signal-connected to the sixth pressure sensor P6 via a link. The first control unit 200 is adapted to receiving from the sixth pressure sensor P6 via the link a signal representing air pressure data of the tyre of the left supporting wheel LS.

The second control unit 300 is signal-connected to the first level sensor L1 of the air suspension system. The second control unit 300 is adapted to receiving from the level sensor L1 a signal representing level data for the vehicle frame 2, 3 relative to a reference point.

The second control unit 300 is signal-connected to the level sensors 2L, 3L of the air suspension system. The second control unit 300 is adapted to receiving from the level sensors 2L, 3L a signal representing level data for the vehicle frame 2, 3 relative to a reference point.

The second control unit 300 is adapted to using inter alia information from the level sensors as a basis for setting correct levels of the vehicle's chassis for any required load transfer.

The second control unit 300 is signal-connected via a link to the valve configuration 100 of the air suspension system. The second control unit 300 is adapted to sending to the valve configuration 100 signals representing instructions for effecting distribution of air pressure between bellows units of the bellows configuration on the basis inter alia of pressure difference data between air pressures of tyres of the vehicle's wheels relative to predetermined air pressures.

According to an embodiment, the second control unit 300 is signal-connected to a pressure sensor of each bellows unit B1-B7 of the bellows configuration via a respective link. The second control unit 300 is adapted to receiving from each pressure sensor via the link a signal representing air pressure data of the respective bellows unit B1-B7 of the bellows configuration.

The second control unit 300 is adapted to using the signals representing air pressure data of pressure sensors as a basis for calculating the difference between the air pressure in bellows units of the bellows configuration, whereupon the valve configuration 100 is adapted to effecting pressure distribution between bellows units on the basis inter alia of comparison between information from pressure sensors of said bellows units B1-B7 in order to effect load transfer. For example, the difference in air pressure between the first and second bellows units B1-B2 is calculated.

The central control unit 400 is signal-connected via a link to load indicating means 410. The central control unit 400 is adapted to receiving from the load indicating means 410 via the link signals representing load data about the vehicle's load, i.e. the load upon its respective tyres. The central control unit 400 is adapted to comparing the load value with a predetermined load value.

The central control unit 400 is signal-connected via a link to ambient temperature detection means 420. The central control unit 400 is adapted to receiving from said ambient temperature detection means 420 via the link signals representing ambient temperature data.

The central control unit 400 is signal-connected via a link to road state detection means 430. The central control unit 400 is adapted to receiving from said road state detection means 430 via the link signals representing road state data. Road state comprises unevenness, slippery running surface due to ice/snow etc.

The central control unit 400 is signal-connected via a link to tyre temperature detection means 440. The central control unit 400 is adapted to receiving from said tyre temperature detection means 440 via the link signals representing temperature data of the vehicle's tyres.

The central control unit 400 is signal-connected via a link to a speed sensor 450. The central control unit 400 is adapted to receiving from the speed sensor 450 signals representing vehicle speed data.

The central control unit 400 is signal-connected via a link to the first control unit 200. The central control unit 400 is adapted to receiving from the first control unit 200 signals representing air pressure difference data in the form of the difference between air pressures detected by pressure sensors P1, P2; P3a, P3b, P4a, P4b, P5, P6 and predetermined air pressures of the vehicle's tyres.

The central control unit 400 is signal-connected via a link to the second control unit 300. The central control unit 400 is adapted to receiving from the second control unit 300 signals representing level difference data from levels detected by level sensors L1, L2, L3.

The central control unit 400 is signal-connected via a link to the second control unit 300. The central control unit 400 is adapted to receiving from the second control unit 300 signals representing air pressures of the bellows units B1-B7.

The central control unit 400 is adapted to using said air pressure difference data in the form of the difference between detected air pressures and predetermined air pressures of the vehicle's tyres, and also, where applicable, load data and/or ambient temperature data and/or road state data and/or tyre temperature data and/or level difference data and/or bellows air pressure data, as a basis for sending information to the valve configuration 100 to use the bellows configuration to reduce the load upon at least the tyre in which the air pressure is below said pressure value. The type of load reduction effected by the bellows configuration depends on which tyre has a reduced air pressure, such that load reduction may be effected by load transfer between the tag axle X3 and the powered axle X2 when any of the tyres of the wheels of these axles has a reduced air pressure, or by load distribution between tyres of an axle. In the event of reduced air pressure of either or both of the supporting wheels, said load reduction by the bellows configuration may be effected by raising the tag axle X3 by means of the seventh bellows unit B7 of the bellows configuration.

The central control unit 400 is signal-connected via a link to an interface 460. The central control unit 400 is adapted to using said air pressure difference data and also, where applicable, certain or all of the data mentioned above about vehicle load, ambient temperature, road state, tyre temperatures etc. as a basis for sending a warning to the driver about a puncture or similar air pressure reduction in any tyre and about how long and how far the vehicle might be driven.

In the example of puncture of any of the tyres of the supporting wheels, the load/pressure on that wheel is reduced by load transfer to the powered axle so that the load upon the powered axle is increased, according to an embodiment, by using the seventh bellows unit B7 to raise the tag axle X3. Whether and to what extent this load transfer may be effected may depend on how heavily laden the vehicle is, the ambient temperature affecting inter alia the surface, the state of the road, which may be in terms of it being slippery and/or uneven, tyre temperature and vehicle speed. At the same time, the driver is informed about pressure reduction in the tyre and the possibility of continuing to drive and how long/far. Should the vehicle be fully laden such that in normal operation no tyre load transfer is allowed, the system may be so configured that in the event of puncture the central control unit 400 overrides it so that load transfer, i.e. reducing the load upon the tyre, is allowed to a certain extent and for a brief period.

The central control unit 400 is signal-connected via a link to a speed adaptation means 470. According to an embodiment the central control unit 400 is adapted to comparing speed data with said pressure difference data, and if said pressure difference data exceed a predetermined value and at the same time the speed exceeds a certain value, it sends a signal to the speed adaptation means 470 to reduce the vehicle's speed. According to a variant the speed adaptation means 470 is configured to respond to pressure reduction in tyres, e.g. punctures, by preventing speed increase beyond a certain predetermined value.

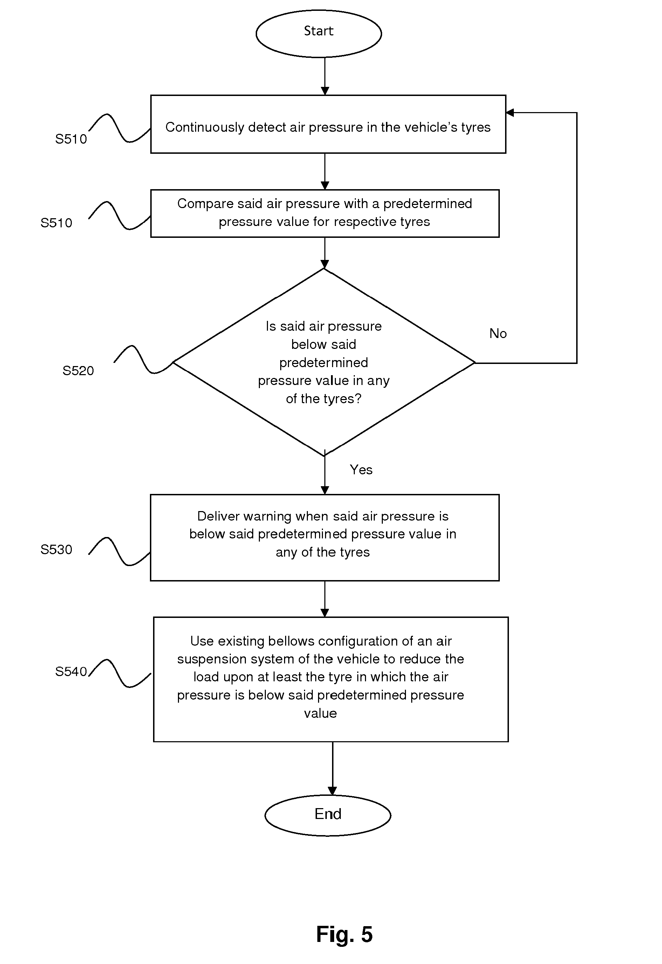

Fig. 5 is a schematic block diagram of a method according to an embodiment of the present invention.

According to an embodiment, the method for improving the drivability of a motor vehicle comprises a first step S510 in which the air pressure in the vehicle's tyres is continuously detected.

According to an embodiment, the method for improving the drivability of a motor vehicle comprises a second step S520 in which said air pressure is compared with a predetermined pressure value for the respective tyres.

According to an embodiment, the method for improving the drivability of a motor vehicle comprises a third step S530 in which a warning is delivered when said tyre pressure is below said predetermined pressure value in any of the tyres.

According to an embodiment, the method for improving the drivability of a motor vehicle comprises a fourth step S540 in which the load upon at least the tyre in which the air pressure is below said predetermined pressure value is reduced by an existing bellows configuration of an air suspension system of the vehicle.

In relation inter alia to Fig. 2, an air suspension system is described above with a certain configuration of bellows units and level sensors, but any appropriate air suspension system may be used to reduce the load upon tyres of wheels when tyre pressure reduction occurs. There may for example be double bellows units for each axle, level sensors associated with each wheel, etc. The valve configuration may be of any appropriate kind for regulation of pressures in the bellows units.

A first control unit 200 for monitoring of air pressure in the vehicle's tyres and a second control unit 300 for control of air suspension by means of valve configurations and bellows configurations were referred to above as communicating via a central control unit 400. The first control unit 200 and the second control unit 300 might alternatively communicate directly with one another. A further alternative is that the central control unit 400 might incorporate, like the first control unit 200, monitoring of air pressures in tyres and, like the second control unit 300, control of air suspension.

The vehicle described above in relation to Figs. 1 and 2 has a front axle X1, a powered axle X2 and a tag axle X3, but the invention is applicable to any appropriate vehicle with, for example, a front axle and rear axle with two-wheel or four-wheel drive; two front axles, a powered axle and a tag axle; or a vehicle with more wheel shafts, e.g. ten or twelve wheel shafts with drive on one or more axles.

The foregoing description of the preferred embodiments of the present invention is provided for illustrative and descriptive purposes. It is not intended to be exhaustive, nor to limit the invention to the variants described. Many modifications and variants will obviously suggest themselves to one skilled in the art. The embodiments have been chosen and described in order best to explain the principles of the invention and the practical applications thereof and hence to make it possible for specialists to understand the invention for various embodiments and with the various modifications appropriate to the intended use.

## Claims

1. A method for improving the drivability of a motor vehicle, comprising the steps of:
- continuously detecting (S510) the air pressure in the vehicle's tyres;
- comparing (S520) said air pressure with a predetermined pressure value for the respective tyres;
- delivering (S530) a warning when said tyre pressure is below said predetermined pressure value in any of the tyres,
**characterised by**
- the step of using an existing bellows configuration (B1, B2, B3, B4, B5, B6, B7) of an air suspension system of the vehicle to reduce the load (S540) upon at least the tyre in which the air pressure is below said predetermined pressure value.

2. A method according to claim 1, in which the step of reducing the load upon a tyre involves reducing the air pressure of a bellows unit (B1, B2, B3, B4, B5, B6) of the bellows configuration which is associated with the tyre in which the air pressure is below said predetermined pressure value, so that the vehicle's chassis (2, 3) is lowered relative to the axle (X1, X2, X3) which is associated with said tyre.

3. A method according to claim 1 or 2, whereby, on a vehicle which comprises a powered axle (X2) provided with powered wheels, the step of reducing the load upon a tyre involves load transfer to tyres of powered wheels on the opposite side of the vehicle.

4. A method according to any one of claims 1-3, whereby, on a vehicle which comprises a tag axle (X3) provided with supporting wheels, the step of reducing the load upon a tyre involves raising said tag axle (X3).

5. A method according to claim 4, whereby the step of raising said tag axle (X3) involves increasing the air pressure in a bellows unit (B7) of the bellows configuration which is associated with the tag axle (X3), so that the bellows unit (B7) raises the tag axle (X3) relative to the vehicle's chassis (2, 3).

6. A method according to claim 4 or 5, whereby the step of reducing the load upon a tyre involves load transfer between the tag axle (X3) and the powered axle (X2).

7. A method according to any one of claims 1-6, whereby, on a vehicle which comprises a front axle (X1) provided with front wheels, the step of load reduction upon a tyre involves load transfer to tyres of front wheels on the opposite side of the vehicle.

8. A method according to claim 7, whereby, on a vehicle which comprises a further front axle, the step load reduction upon a tyre involves load transfer between said front axles.

9. A system for improving the drivability of a motor vehicle, comprising an air suspension system incorporating a bellows configuration (B1, B2, B3, B4, B5, B6, B7), devices (P1, P2; P3a, P3b, P4a, P4b, P5, P6) for detecting the air pressure in the vehicle's tyres, means (400) for comparing said air pressure with a predetermined pressure value for the respective tyres, and devices (400, 460) for delivering a warning when said tyre pressure is below said predetermined pressure value in any of the tyres, **characterised by** devices (100, 400) for using said bellows configuration (B1, B2, B3, B4, B5, B6, B7) to reduce the load upon at least the tyre in which the air pressure is below said predetermined pressure value.

10. A system according to claim 9, whereby, when the pressure in any tyre is below said predetermined pressure value, the air pressure of a bellows unit (B1, B2, B3, B4, B5, B6) of the bellows configuration which is associated with said tyre is arranged to be reduced so that the vehicle's chassis (2, 3) is lowered relative to the axle (X1, X2, X3) which is associated with said tyre, so that the load upon the tyre is reduced.

11. A system according to claim 9 or 10, whereby, on a vehicle which comprises a powered axle (X2) provided with powered wheels, said bellows configuration is adapted to effecting load transfer to tyres of powered wheels on the opposite side of the vehicle.

12. A system according to any one of claims 9-11, whereby, on a vehicle which comprises a tag axle (X3) provided with supporting wheels, said bellows configuration is adapted to raising said tag axle (X3).

13. A system according to claim 12, whereby, when the air pressure in any of the tyres of the supporting wheels is below said predetermined pressure value, the air pressure of a bellows unit (B7) of the bellows configuration which is associated with the tag axle (X3) is arranged to be increased so that said tag axle (X3) is raised relative to the vehicle's chassis (2, 3).

14. A system according to claim 12 or 13, whereby said bellows configuration is adapted to effecting load transfer between the tag axle (X3) and the powered axle (X2).

15. A system according to any one of claims 9-14, whereby, on a vehicle which comprises a front axle (X1) provided with front wheels, said bellows configuration is adapted to effecting load transfer to tyres of front wheels on the opposite side of the vehicle.

16. A system according to claim 15, whereby, on a vehicle which comprises a further front axle, said bellows configuration is adapted to effecting load transfer between said front axles.

17. A motor vehicle comprising a system according to any one of claims 9-16.
